# EUROPEAN PATENT SPECIFICATION

(11) **EP 2 890 907 B1**
(45) Date of publication and mention of the grant of the patent: **13.09.2017**
(21) Application number: 12812529.1
(22) Date of filing: 19.12.2012
(51) Int. Cl.: F16C 9/02, F16C 23/08, F16C 33/60

(54) **CRANKSHAFT ASSEMBLY**
KURBELWELLENBAUGRUPPE
ENSEMBLE DE VILEBREQUIN

(30) Priority: 31.08.2012 WO PCT/EP2012/003653
(43) Date of publication of application: 08.07.2015
(73) Proprietor: Aktiebolaget SKF, 415 50 Göteborg (SE)
(72) Inventor: BAUBET, Yannick, NL-3439 MT Nieuwegein (NL); STIGSJOO, Lars, S-42461 Angered (SE); KNIGHT, Peter, S-413 18 Göteborg (SE); NOORDMAN, Martines Maria Josef, NL-4117 GV Erichem (NL)
(74) Representative: Tweedlie, Diane Harkness
(86) International application number: PCT/EP2012/005257
(87) International publication number: WO 2014/032687

(56) References cited:
- EP-A2- 2 071 204
- DE-A1- 3 112 303
- DE-A1- 10 258 884

## Description

### Technical Field

The invention relates to a crankshaft assembly comprising one of more shaft sections which are rotationally supported by a rolling element bearing.

### Background

A crankshaft of a combustion engine, for example, is supported in the engine housing by means of main crankshaft bearings, which are generally sliding bearings. That is, the number of shaft sections by which the crankshaft is supported in the housing has a corresponding number of sliding bearing surfaces in the housing.

It is also known to support the crankshaft in the engine housing by means of rolling element bearings, such as deep groove ball bearings or cylindrical roller bearings.

The advantage of using roller bearings instead of sliding bearings for supporting the crankshaft in the engine housing is that the friction during rotation of the crankshaft can be reduced. On the other hand, the application of rolling element bearings can be detrimental, since misalignment of the bearing arrangement and/or offsets in the shaft sections of the crankshaft due to the crankshaft loading can lead to a significant reduction in bearing life.

Furthermore, when roller bearings are used as main crankshaft bearings, they are prone to noise and vibrations. Due to the geometry of a crankshaft, the bearings have an outer ring consisting of two ring halves, which are split radially. In practice, there is always some radial mismatch at the interface between the two halves, leading to noise and vibration when the interface is over-rolled.

From DE 10258884, it is known to use self-aligning roller bearings for supporting the crankshaft of an engine. An example of a double-row spherical roller bearing comprising split bearing rings is disclosed in DE 3112303. A bearing with split outer ring haves is also known from EP 2071204, whereby radially inner side edge portions of circumferential end surfaces of the respective split outer ring halves are rounded into round surfaces.

It is an object of the present invention to propose a bearing solution for a crankshaft assembly, which has a low friction, which places less strict requirements on correct alignment of a single bearing location relatively to another and which minimizes the generation of noise and vibration. As a result, improved reliability of bearing operation can be achieved.

### Summary of the invention

The object of the invention is achieved by means of a crankshaft assembly as specified in claim 1.

Specifically, the bearing which supports at least one of the shaft sections of the crankshaft, relatively to a housing, is a toroidal roller bearing.

The inner ring of the toroidal roller bearing can be formed directly by the shaft section of the crankshaft. In this case, the shaft section has at least partially a concave surface forming an inner raceway for the toroidal rollers.

The outer ring of the toroidal roller bearing can be formed directly by a part of the housing, which then has an inner circumferential surface, concave in shape, that forms an outer raceway for the toroidal rollers.

Alternatively, the outer ring of the toroidal roller bearing can be a separate part mounted in a bore of the housing.

The outer ring consists of two ring halves which are split in a radial direction, and which may be joined together by means of e.g. screws. At an interface where the two ring halves meet, an adjoining edge of at least one ring half is provided with a curved profile. According to the invention, the curved profile has a logarithmic curvature, formed in an electrochemical machining (ECM) process. The logarithmic curvature minimizes impacts when an interface is over-rolled.

The logarithmic curvature is defined between a start point at the interface and an endpoint on the outer raceway. The start point has a depth relative to the outer raceway that is at least equal to a maximum radial clearance of the bearing. The endpoint preferably has a length relative to the interface, which is at least equal to twice the radial clearance. Consequently, the rollers do not encounter an edge, and noise and vibration are reduced.

Suitably, the adjoining edge of both ring halves is provided with a logarithmically curved profile as defined above.

The toroidal roller bearing preferably has a maximum radial clearance of between 0.03 mm and 0.08 mm, specifically preferred between 0.045 mm and 0.065 mm.

The rollers of the toroidal roller bearing are preferably held by a cage. The cage can consist of at least two split parts. The cage may be made from a metal material such as brass or of a polymer material such PEEK.

Thus, the invention proposes to support the main bearing of a crankshaft with toroidal roller bearings (known under the trademark CARB from AB SKF) having a split outer ring with logarithmically curved edge profiles at the adjoining edges of at least one ring half.

By this concept, a cost effective roller bearing is obtained with a high reliability.

The following advantages are obtained with the proposed solution:
The friction of the main bearings of the crankshaft assembly is reduced. In the case of a crankshaft of a combustion engine in a vehicle, this helps to reduce the fuel consumption.

The bearing is able to take a dynamic combustion load; this is specifically relevant in the case of a Diesel engine which delivers high loads. The toroidal bearing is self-aligning, meaning that it runs in the optimized loading zone. Furthermore, crankshaft deflections due to the nature of the loading can be accommodated.

The toroidal bearing also operates well with a relatively large radial clearance, which allows any radial offset between the two outer ring halves to be accommodated. Furthermore, the logarithmically curved profiles minimize impacts, as well as reducing noise and vibration.

Consequently, an assembly according to the invention enables friction and noise reduction in combination with increased bearing life.

The proposed design is suitable for combustion engines and compressors, and several of the bearings of the crankshaft bearing arrangement can be designed accordingly.

Not all of the main crankshaft bearings need be executed as toroidal roller bearings, however. In an advantageous embodiment, one of the shaft sections is supported by a cylindrical roller bearing (CRB) or a spherical roller bearings (SRB). The advantage of such a bearing is that it can additionally provide axial thrust bearing functionality.

Other advantages of the present invention will become apparent from the detailed description and accompanying figures.

### Brief description of the drawings

The drawings show an embodiment of the invention.
- Fig. 1: is a side cross-sectional view through a part of a crankshaft assembly according to the invention, the crankshaft being rotatably supported in a split housing via a toroidal roller bearing.
- Fig. 2: is a front cross-sectional view of the part of the crankshaft assembly from figure 1, showing first and second halves of the split housing
- Fig. 3: is an exploded view of a detail from figure 2, showing an interface where the first and second halves of the housing adjoin.

### Detailed description of the invention

In the figures, an example of part of a crankshaft assembly is depicted, suitable for use in a vehicle combustion engine. The crankshaft 10 has several shaft sections 12, depending on the number of cylinders of the engine. Each shaft section 12 is rotatably supported in a housing 20 by means of a rolling element bearing. According to the invention, at least one of the bearings which supports a shaft section 12 is a toroidal roller bearing 30, comprising a set of toroidal rollers 31. The toroidal rollers have a convex outer surface, with a radius of curvature R.

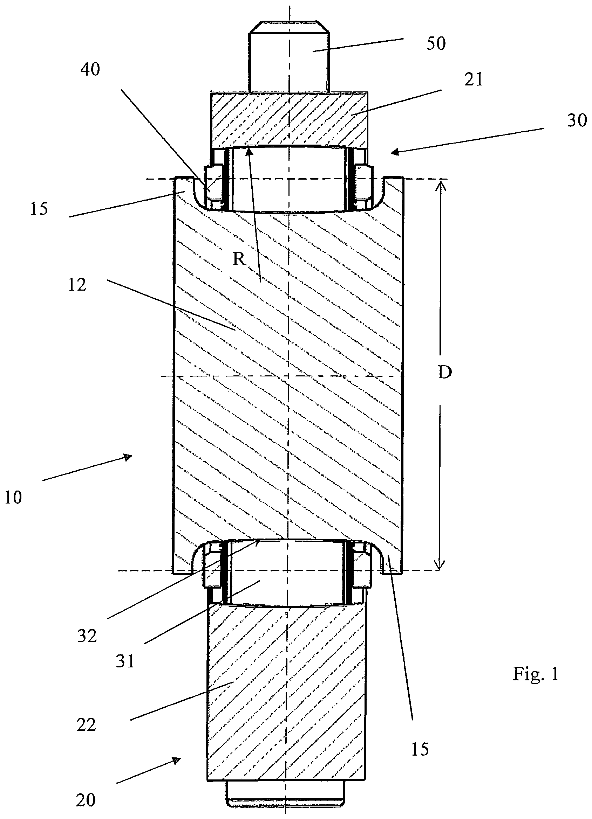

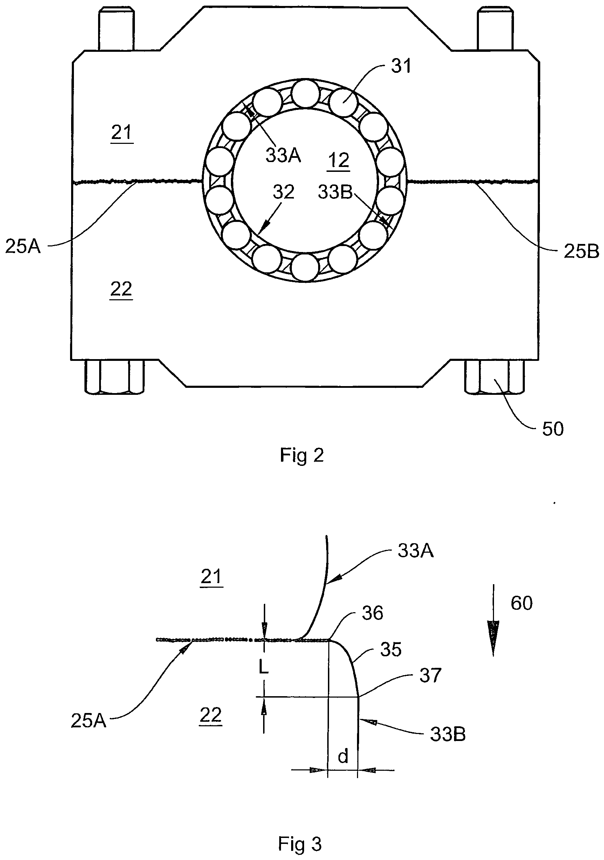

In the depicted example, an inner ring of the bearing 30 is formed by the shaft section 12 itself. A radially outer surface of the shaft section has a correspondingly curved concave shape, and serves as an inner raceway 32 for the toroidal rollers 31. The shaft section 12 is axially delimited by radially extending parts, known as crank webs 15. The webs are depicted in Fig. 1 in a truncated form and in reality extend much further. To enable assembly of the bearing 30, an outer ring of the bearing and the housing are split radially into two halves, as best shown in Fig. 2. The housing has a first part 21 and a second part 22 that are joined together by means of e.g. bolts 50. The two parts adjoin at a first interface 25A and a second interface 25B

In this example, the housing 20 also serves as the bearing outer ring. Accordingly, the first and second housing parts 21, 22 have a radially inner surface that is convex in shape and which serves an outer raceway for the toroidal rollers 31. The outer raceway therefore consists of a first portion 33A and a second portion 33B. The rollers are held in position by a cage 40. To permit assembly, the cage is also of split design, whereby the two cages halves may be connected together after assembly, or may remain unconnected. The cage may be made of brass or a polymer material.

The toroidal roller bearing allows a certain maximal axial displacement, in the present case about 3 mm. Also a misalignment can be accepted of up to about 0.5°. The bearing is thus able to accommodate the misalignment which results from the dynamic loading of the crankshaft.

In order to optimize the load distribution across each roller 31, to prevent excessive edge loads at the axial extremities, the radius of curvature of the toroidal rollers 31 has a predefined value with reference to a pitch diameter D of the bearing 30. The pitch diameter is the theoretical median diameter of the bearing, which passes through the center of the rollers 31. Suitably, the radius of curvature R of the rollers is greater than 1.5 D and less than 2.5D. In the depicted example, R is approximately equal to 2D.

The toroidal roller bearing 30 is able to operate with a relatively large radial clearance, the radial clearance being the maximum amount by which the bearing inner ring can be displaced in radial direction relative to the outer ring. In the depicted example, the bearing 30 has a radial clearance of approximately 50 microns. A relatively large radial clearance is beneficial for accommodating a radial offset between the first and second sections 33A, 33B of the outer raceway.

A slight radial offset is practically inevitable when the split housing is reassembled. Consequently, there is a risk of noise and vibration as the rollers over-roll the first and second interfaces 25A, 25B, as well as a risk of impacts. According to the invention, these risks are mitigated by providing a curved profile at the edge of at least one of the first and second raceway portions 33A, 33B at the corresponding first and second interfaces.

A detail of the first interface 25A is shown in Fig. 3. As may be seen from this figure, a roller moving in the direction indicated by the arrow 60 encounters a height difference at the first interface 25A. To prevent an impact with an edge of the second raceway portion 33B, the edge 35 has a profiled surface defined between a start point 36 and an end point 37. The start point of the edge profile 35 lies on the plane of the first interface 25A and has a depth d relative to the second outer raceway portion 33B that is at least equal to the radial clearance of the bearing. Consequently, the rollers 31 are unloaded at the interface, reducing noise and vibration. The end point 37 of the edge profile surface lies on the second outer raceway portion 33B, and is situated at a length L from the start point 36 (in circumferential direction), which is at least equal to twice the radial clearance. Between the start and end points, the edge profile 35 has a logarithmic curvature. The edge profile is created using an electrochemical machining processes, which enables the logarithmic curvature to be realized with precision. Suitably, each edge of the two ring halves is provided with such an edge profile,

A number of aspects/embodiments of the invention have been described. It is to be understood that each aspect/embodiment may be combined with any other aspect/embodiment. Moreover the invention is not restricted to the described embodiments, but may be varied within the scope of the accompanying patent claims.

### Reference numerals

- 10: Crankshaft
- 12: Shaft section of crankshaft
- 15: Crank webs
- 20: Housing
- 21: First housing part
- 22: Second housing part
- 25A: First interface between housing parts
- 25B: Second interface between housing parts
- 30: Toroidal roller bearing
- 31: Toroidal rollers
- 32: Inner raceway
- 33A: First portion of outer raceway
- 33B: Second portion of outer raceway
- 35: Edge profile on outer raceway portion
- 36: Start point of edge profile
- 37: End point of edge profile
- 40: Cage
- 50: Bolts
- 60: Direction of rolling

## Claims

1. Assembly comprising a crankshaft (10) having a plurality of shaft sections (12), in which at least one shaft section is rotationally supported relative to a housing (20) by means of a bearing (30), which is a toroidal roller bearing (30) comprising a plurality of toroidal rollers (31),
**characterized in that**
the toroidal roller bearing (30) which supports the at least one shaft section (12, has an outer ring which is split into a first ring half (21) and a second ring half (22) and comprises a first outer raceway portion (33A) and a second outer raceway portion (33B),
**and in that**
at an interface (25A, 25B) between the first and second outer ring halves (21, 22), an edge of one ring half is provided with an edge profile (35) having a curved surface when viewed in an axial direction;
the curved surface is defined between a start point (36) and an endpoint (37);
the start point of the edge profile (35) on the ring half (22) is located on the plane of the interface (25A), and has depth (d) relative to the outer raceway portion (33B) of that ring half (22) which is at least equal to a maximum radial clearance of the bearing (30);
the end point (37) of the edge profile (35) on the ring half (22) is located on the outer raceway portion (33B) of that ring half (22); and
the curved surface of the edge profile (35) has a logarithmic curvature between the start point (36) and the end point (37), created by means of an electrochemical machining process.

2. Assembly according to claim 1, wherein the end point (37) of the edge profile lies at a distance (L) from the start point (36), in circumferential direction, the distance being equal to at least twice the maximum radial clearance of the bearing (30)

3. Assembly according to claim 1 or 2, wherein the bearing (30) has a pitch circle diameter (D) and the toroidal rollers (31) have a radius of curvature (R), and wherein 1.5D < R < 2.5D.

4. Assembly according to claim 3, wherein the radius of curvature (R) of the toroidal rollers (31) is equal to approximately 2D.

5. Assembly according to any preceding claim, wherein an inner ring of the toroidal roller bearing (30) is formed directly by the shaft section (12) of the crankshaft (10), the shaft section having a concave surface that forms an inner raceway (32) for the toroidal rollers (31).

6. Assembly according to any preceding claim, wherein:
the split outer ring of the toroidal roller bearing (30) is formed by a first part (21) and a second part (22) of the housing;
a radially inner surface of the first part (21) has a concave surface that forms the first outer raceway portion (33A); and
a radially inner surface of the second part (22) has a concave surface that forms the second outer raceway portion (33B).

7. Assembly according to any of claims 1 to 5, wherein the outer ring of the toroidal roller bearing (30) is a separate part mounted in a bore of the housing (20).

8. Assembly according to any preceding claim, wherein the toroidal roller bearing (30) has a maximum radial clearance of between 0.03 mm and 0.08 mm, preferably between 0.045 mm and 0.065 mm.

9. Assembly according to any preceding claim, wherein a further shaft section of the crankshaft (10) is supported by a spherical roller bearing or a cylindrical roller bearing.

10. A method of manufacturing a rolling element bearing for supporting a shaft section (12) of a crankshaft (10), wherein the bearing (30) has a maximum radial clearance, the method comprising steps of:
providing a bearing outer ring (20);
splitting the outer ring in a radial direction to form a first ring half (21) and a second ring half (22);
**characterized in that**
the outer ring is the outer ring of a toroidal roller bearing (30), a logarithmic edge profile (35) is provided along a split edge of at least one ring half and **in that** the step of providing an edge profile (35) is carried out by means of electrochemical machining.

11. The method of claim 10, wherein
the edge profile (35) has a logarithmically curved surface, defined between a start point (36) and an end point (37) along the split edge, the start point (36) having a depth (d) relative to an outer raceway portion (33B) of the at least one ring half (22) which is at least equal to the maximum radial clearance of the bearing.

## Patentansprüche

1. Baugruppe, aufweisend eine Kurbelwelle (10) mit einer Vielzahl von Wellenabschnitten (12), bei welcher mindestens ein Wellenabschnitt in Bezug auf ein Gehäuse (20) mit Hilfe eines Lagers (30) drehbeweglich gelagert ist, welches ein toroidales Rollenlager (30) ist, welches eine Vielzahl von toroidalen Rollen (31) aufweist,
**dadurch gekennzeichnet, dass**
das toroidale Rollenlager (30), welches den mindestens einen Wellenabschnitt (12) lagert, einen Außenring besitzt, welcher in eine erste Ringhälfte (21) und eine zweite Ringhälfte (22) aufgeteilt ist und einen ersten äußeren Laufring-Abschnitt (33A) und einen zweiten äußeren Laufring-Abschnitt (33B) aufweist,
**und dass**
an einer Schnittstelle (25A, 25B) zwischen der ersten und zweiten äußeren Laufring-Hälfte (21, 22) ein Rand einer Ringhälfte mit einem Randprofil (35) versehen ist, welches eine gekrümmte Oberfläche besitzt, wenn er in einer axialen Richtung betrachtet wird;
die gekrümmte Oberfläche zwischen einem Startpunkt (36) und einem Endpunkt (37) definiert ist; der Startpunkt des Randprofils (35) auf der Ringhälfte (22) auf der Ebene der Schnittstelle (25A) angeordnet ist und eine Tiefe (d) in Bezug auf den äußeren Laufring-Abschnitt (33B) dieser Ringhälfte (22) besitzt, welche mindestens gleich einem radialen Spiel des Lagers (30) ist;
der Endpunkt (37) des Randprofils (35) auf der Ringhälfte (22) auf dem äußeren Laufring-Abschnitt (33B) dieser Ringhälfte (22) angeordnet ist; und
die gekrümmte Oberfläche des Randprofils (35) eine logarithmische Krümmung zwischen dem Startpunkt (36) und dem Endpunkt (37) besitzt, welche mittels eines elektrochemischen Bearbeitungsprozesses gebildet wird.

2. Baugruppe nach Anspruch 1, wobei der Endpunkt (37) des Randprofils in einem Abstand (L) in Umfangsrichtung von dem Startpunkt (36) entfernt liegt, wobei der Abstand gleich mindestens zwei Mal das maximale radiale Spiel des Lagers (30) ist.

3. Baugruppe nach Anspruch 1 oder 2, wobei das Lager (30) einen Teilkreisdurchmesser (D) besitzt und die torodialen Rollen (31) einen Krümmungsradius (R) besitzen, und wobei 1,5D < R < 2,5D ist.

4. Baugruppe nach Anspruch 3, wobei der Krümmungsradius (R) der toroidalen Rollen (31) gleich ungefähr 2D ist.

5. Baugruppe nach einem der vorhergehenden Ansprüche, wobei ein innerer Ring des toroidalen Rollenlagers (30) direkt durch den Wellenabschnitt (12) der Kurbelwelle (10) gebildet wird, wobei der Wellenabschnitt eine konkave Oberfläche besitzt, welche einen inneren Laufring (32) für die toroidalen Rollen (31) bildet.

6. Baugruppe nach einem der vorhergehenden Ansprüche, wobei:
der geteilte äußere Ring des toroidalen Rollenlagers (30) von einem ersten Teil (21) und einem zweiten Teil (22) des Gehäuses gebildet wird;
eine radiale innere Oberfläche des ersten Teils (21) eine konkave Oberfläche besitzt, welche den ersten äußeren Laufring-Abschnitt (33A) bildet; und
eine radiale innere Oberfläche des zweiten Teils (22) eine konkave Oberfläche besitzt, welche den zweiten äußeren Laufring-Abschnitt (33B) bildet.

7. Baugruppe nach einem der Ansprüche 1 bis 5, wobei der äußere Ring des toroidalen Rollenlagers (30) ein separates Teil ist, welches in einer Bohrung des Gehäuses (20) montiert ist.

8. Baugruppe nach einem der vorhergehenden Ansprüche, wobei das toroidale Rollenlager (30) ein maximales radiales Spiel von zwischen 0,03 mm und 0,08 mm, vorzugsweise zwischen 0,045 mm und 0,065 mm, besitzt.

9. Baugruppe nach einem der vorhergehenden Ansprüche, wobei ein weiterer Wellenabschnitt der Kurbelwelle (10) von einem Kugelrollenlager oder einem Zylinderrollenlager gelagert ist.

10. Verfahren zum Herstellen eines Wälzkörperlagers zum Lagern eines Wellenabschnitts (12) einer Kurbelwelle (10), wobei das Lager (30) ein maximales radiales Spiel besitzt, wobei das Verfahren die folgenden Schritte aufweist:
Bereitstellen eines äußeren Lagerrings (20);
Teilen des äußeren Rings in einer radialen Richtung, um eine erste Ringhälfte (21) und eine zweite Ringhälfte (22) zu bilden;
**dadurch gekennzeichnet, dass**
der äußere Ring der äußere Ring eines toroidalen Rollenlagers (30) ist, ein logarithmisches Randprofil (35) entlang eines Aufteilrandes von mindestens einer Ringhälfte vorgesehen wird und dass der Schritt des Bereitstellens eines Randprofils (35) mittels elektrochemischer Bearbeitung ausgeführt wird.

11. Verfahren nach Anspruch 10, wobei
das Randprofil (35) eine logarithmisch gekrümmte Oberfläche besitzt, welche zwischen einem Startpunkt (36) und einem Endpunkt (37) entlang des Aufteilrandes definiert ist, wobei der Startpunkt (36) eine Tiefe (d) in Bezug auf den äußeren Laufring-Abschnitt (33B) der mindestens einen Ringhälfte (22) besitzt, welche mindestens gleich dem maximalen radialen Spiel des Lagers ist.

## Revendications

1. Ensemble comprenant un vilebrequin (10) comportant une pluralité de sections d'arbre (12), dans lequel au moins une section d'arbre est soutenue en rotation par rapport à un carter (20) au moyen d'un palier (30), qui est un palier (30) à rouleaux toroïdaux comprenant une pluralité de rouleaux toroïdaux (31), **caractérisé en ce que** le palier (30) à rouleaux toroïdaux qui soutient ladite section d'arbre (12) comporte une bague extérieure qui est divisée en une première moitié (21) de bague et une seconde moitié (22) de bague et comprend une première partie (33A) de chemin de roulement extérieur et une seconde partie (33B) de chemin de roulement extérieur,
et **en ce que** :
au niveau d'une interface (25A, 25B) entre les première et seconde moitiés (21, 22) de bague extérieure, un bord d'une moitié de bague est doté d'un profil de tranche (35) comportant une surface courbe, si on regarde dans la direction axiale ;
la surface courbe est définie entre un point de départ (36) et un point final (37) ;
le point de départ du profil de tranche (35) sur la moitié (22) de bague est situé sur le plan de l'interface (25A) et a une profondeur (d) par rapport à la partie (33B) de chemin de roulement extérieur de cette moitié (22) de bague qui est au moins égale au jeu radial maximal du palier (30) ;
le point final (37) du profil de tranche (35) sur la moitié (22) de bague est situé la partie (33B) de chemin de roulement extérieur de cette moitié (22) de bague ; et
la surface courbe du profil de tranche (35) présente une courbure logarithmique entre le point de départ (36) et le point final (37), créée au moyen d'un processus d'usinage électrochimique.

2. Ensemble selon la revendication 1, dans lequel le point final (37) du profil de tranche se trouve à une distance (L) du point de départ (36), dans la direction circonférentielle, la distance étant égale à au moins deux fois le jeu radial maximal du palier (30).

3. Ensemble selon la revendication 1 ou 2, dans lequel le palier (30) a un diamètre (D) de cercle primitif et les rouleaux toroïdaux (31) ont un rayon de courbure (R), et dans lequel 1,5D < R < 2,5D.

4. Ensemble selon la revendication 3, dans lequel le rayon de courbure (R) des rouleaux toroïdaux (31) est égal à environ 2D.

5. Ensemble selon l'une quelconque des revendications précédentes, dans lequel une bague intérieure du palier (30) à rouleaux toroïdaux est constituée directement par la section d'arbre (12) du vilebrequin (10), la section d'arbre comportant une surface concave qui constitue un chemin de roulement intérieur (32) pour les rouleaux toroïdaux (31).

6. Ensemble selon l'une quelconque des revendications précédentes, dans lequel :
la bague extérieure en deux parties du palier (30) à rouleaux toroïdaux est constituée par une première partie (21) et une seconde partie (22) du carter ;
la surface radialement intérieure de la première partie (21) a une surface concave qui constitue la première partie (33A) de chemin de roulement extérieur ; et
la surface radialement intérieure de la seconde partie (22) a une surface concave qui constitue la seconde partie (33B) de chemin de roulement extérieur.

7. Ensemble selon l'une quelconque des revendications 1 à 5, dans lequel la bague extérieure du palier (30) à rouleaux toroïdaux est une pièce séparée montée dans un alésage du carter (20).

8. Ensemble selon l'une quelconque des revendications précédentes, dans lequel le palier (30) à rouleaux toroïdaux a un jeu radial maximal compris entre 0,03 mm et 0,08 mm, de préférence entre 0,045 mm et 0,065 mm.

9. Ensemble selon l'une quelconque des revendications précédentes, dans lequel une autre section d'arbre du vilebrequin (10) est soutenue par un palier à rouleaux sphériques ou un palier à rouleaux cylindriques.

10. Procédé de fabrication d'un palier à éléments de roulement pour soutenir une section d'arbre (12) d'un vilebrequin (10), dans lequel le palier (30) a un jeu radial maximal, le procédé comprenant les étapes consistant à :
produire une bague extérieure (20) de roulement ;
diviser la bague extérieure dans une direction radiale pour former une première moitié (21) de bague et une seconde moitié (22) de bague ;
**caractérisé en ce que** la bague extérieure est la bague extérieure d'un palier (30) à rouleaux toroïdaux, un profil de tranche (35) logarithmique est disposé le long du bord fendu d'au moins une moitié de bague et
**en ce que** l'étape de production d'un profil de tranche (35) est réalisée au moyen d'un usinage électrochimique.

11. Procédé selon la revendication 10, dans lequel le profil de tranche (35) comporte une surface à courbure logarithmique, définie entre un point de départ (36) et un point final (37) le long du bord fendu, le point de départ (36) ayant une profondeur (d) par rapport à une partie (33B) de chemin de roulement extérieur de ladite moitié (22) de bague, qui est au moins égale au jeu radial maximal du palier.
